Europäisches Patentamt

(19) European Patent Office

Office européen des brevets

(11) Publication number: **0 157 949**
**B1**

(12) **EUROPEAN PATENT SPECIFICATION**

(45) Date of publication of patent specification: **05.07.89**

(21) Application number: **84116433.8**

(22) Date of filing: **25.04.84**

(60) Publication number of the earlier application in accordance with Art. 76 EPC: **0 151 578**

(51) Int. Cl.⁴: **D 21 D 3/00, B 05 D 1/02, D 21 H 3/20, D 21 H 1/10**

(54) Improvements in paper and board manufacture.

(30) Priority: **25.04.83 GB 8311152**

(43) Date of publication of application:
**16.10.85 Bulletin 85/42**

(45) Publication of the grant of the patent:
**05.07.89 Bulletin 89/27**

(84) Designated Contracting States:
**AT BE CH DE FR GB LI NL SE**

(56) References cited:
**EP-A-0 018 086**
**CA-A- 704 036**
**CA-A- 733 296**
**GB-A-2 004 204**
**US-A-3 014 812**
**US-A-3 692 552**
**US-A-3 749 315**

(73) Proprietor: **P.T. CHEMICALS LIMITED**
**3 Highland Close**
**Chalfont St. Peter Buckinghamshire SL9 ODR**
**(GB)**

(72) Inventor: **O'Callaghan, William**
**12, Meadway Park Gerrards Cross**
**Buckinghamshire SL9 7NN (GB)**
Inventor: **Cruse, John William**
**The Sussex Barn Silverhill**
**Robertsbridge Sussex TN32 5PA (GB)**

(74) Representative: **Hale, Stephen Geoffrey et al**
**J.Y. & G.W. Johnson Furnival House 14/18 High Holborn**
**London WC1V 6DE (GB)**

Courier Press, Leamington Spa, England.

EP 0 157 949 B1

**Description**

This invention relates to paper or board manufacture. More especially, it relates to a method of paper or board manufacture in which an additive such as an organic polysaccharide in liquid form is applied to the surface of a web of paper or board travelling in a substantially horizontal path at paper- or board-making speed.

It is well known to add during the early stages of paper or board manufacture one or more additives so as to increase the inter-fibre bonding and thus the strength of the eventual paper or board. The additives are usually polysaccharides including starches and cellulose and their chemical derivatives as well as other organic substances capable of forming chemical links with the cellulose which forms the basis of the paper or board web. This latter cellulose may have been modified by the paper or board manufacture in order to assist the web formation during the early stages of manufacture preceding the web formation.

Additives as described in the application can be added to the pulp itself, or to the early stages in the formation of the paper web ("wet-end addition"), i.e. when the water content is reduced from about 99% to about 30%. The additives are in such cases distributed more or less uniformly throughout the thickness of the paper or board. It is also known, for convenience, to apply the additive to the formed web, on one or both surfaces thereof in stages of manufacture subsequent to web formation, as the water content is reduced to 2% to 20% by weight of the web.

"Size-Press Addition" named after the relevant part of the paper-making machine, is an example of a known process; application of additives may be effected at this stage using solutions or dispersion of the additives, or foamed liquids, or dry powders.

It is known to apply to a travelling web of paper or board during the manufacture of paper or board droplets of a liquid additive such as an aqueous starch dispersion ejected from a pressure-operated spray nozzle. Thus, for example, CA—A—733,296 discloses a process in which raw starch, casein and/or isolated soy protein derivatives, or polyvinyl acetate is applied in the form of an aqueous suspension or slurry to a paper web during its travel from the breast roll to the couch roll of a Fourdrinier paper-making machine and it is stated in that document that a satisfactory method of applying the suspension to the web is to spray it on to the web by means of conventional spray nozzle equipment, no other method being mentioned. However such equipment ejects droplets at high velocity from the spray nozzles and they impinge with considerable force on the web. The applicants have found that, especially in the early stages of manufacture of paper or board where the strength of the web is low, there is a risk of damage to the web.

The present invention seeks to provide a way of applying an additive in liquid form to a web of paper or board which shows less risk of damage to the web.

According to the present invention there is provided a process for the manufacture of paper or board in which an additive in liquid form is applied to the surface of a web of paper or board travelling in a substantially horizontal path at paper- or board-making speed, characterised in that

a) the liquid is supplied to the surface of a rotatable member of a rotary atomiser mounted above but close to the web surface, and

b) the rotatable member of the rotary atomiser is rotated to cause the liquid to be discharged as droplets in a substantially horizontal trajectory from an outer edge thereof and thereafter to travel along a path determined by the resultant of the horizontal force on the droplets produced by the rotation of the rotatable member and the force of gravity until they impinge on the web prior to the end of the drying part of the process.

Thus, the invention provides a method for the manufacture of paper or board in which suspensions or solutions of substances in water or other liquids are applied by means of a rotary atomiser. Such an atomiser has hither-to not been used in the manufacture of paper although it is well known in the agricultural art. The atomiser is available in several similar forms including devices sold under several registered trade marks including those of "MICRON MICROMAX" and "LELY HYDRASPIN". These atomisers and other similar atomisers comprise a truncated hollow conical shell set to spin on its vertical axis with the narrow end downwards.

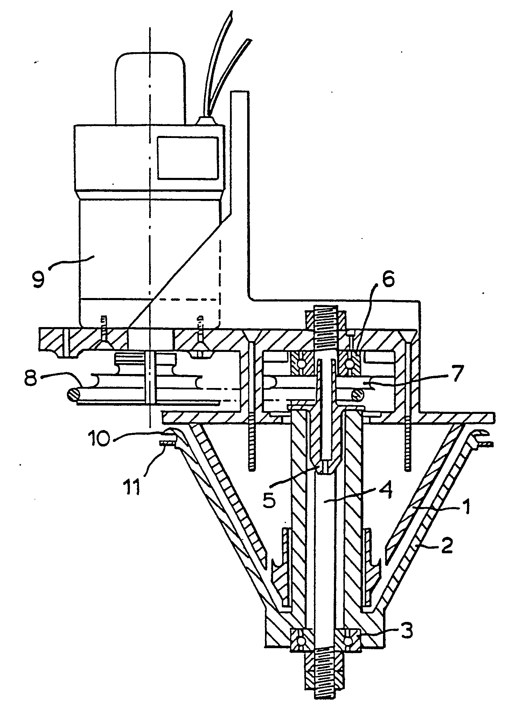

An illustration of the configuration of an atomiser suitable for use in the present invention is shown in the accompanying drawing, which consists of a sectional view of a twin-cone system. The atomiser comprises a fixed inner cone 1 surrounded by an outer cone 2 mounted on a bottom bearing 3 situated at the end of a central shaft 4. A central nozzle 5 is arranged to supply incoming fluid. The outer cone 2 is provided at the top with a top bearing 6 and drive means comprising a belt driven pulley system 7, 8 coupled with an electric motor 9. The upper outer edge of the outer cone 2 is provided with teeth 10 and a circumferential protecting ring. The fluid to be atomised is pumped through one or more ports into the interior of the spinning cone 2 and is subsequently carried upwards and outwards across the inner surface of the spinning cone 2 until it leaves the cone tangentially at its widest, upper circumference. The size of the droplets generated by this movement of the fluid is partly controlled by arranging for the upper edge of the cone to be serrated in the form of teeth 10 arranged radially around its upper surface. The cone may be driven by an electric or air or hydraulic motor through a suitable drive and with suitable bearings to support the cone rigidly on its mounting. In the case of a hydraulic motor, the driving energy may be transferred to the motor by means of a conventional hydraulic generator pump and specialised so-called "hydraulic fluid"; alternatively, the driving energy may be transferred by arranging for the aqueous starch suspension or other fluid, intended to be applied to the paper, to drive a turbine connected to the spinning cone.

For a given atomiser and a liquid of given rheological properties and set spinning at a given speed of rotation, droplets of uniform size are generated. It follows that droplet size can be selected by choosing an appropriate combination of atomiser geometry, fluid rheology and speed of rotation in order to meet the particular requirements of the user. Each of the parameters governing droplet size may be adjusted independently of the others and also independently of the rate of flow of the suspension or solution being applied to the paper surface, whereas with a conventional spray nozzle as previoused used in the art, the droplet size is dependent on the pressure drop across the nozzle which, in turn, governs the rate of flow. Since the droplets produced by the atomiser are of virtually uniform size, they follow similar trajectories thus permitting a remarkably close degree of control of the pattern laid down on the paper surface and, hence, uniformly of application. If the droplets are ejected from the rotating atomiser set to spin on a vertical axis, they will travel in a horizontal trajectory. It therefore follows that they will each travel along a path determined by the resultant of the horizontal forces produced by the tangential motion and the force of gravity. If the body of the atomiser is placed so that the base of the cone is close to the surface to which the fluid is to be applied, it follows that the droplets will travel approximately 20 centimetres in the vertical direction under the force of gravity and so will be travelling very much more slowly than would similar droplets ejected at high velocity from a conventional pressure-operated spray nozzle. This is particularly advantageous when the fluid is to be applied to the surface of paper or board during the early stages of manufacture when the water content of the paper is high and the strength of the paper consequently low.

One or more atomisers may be fixed to a boom set so as to allow the fluid to be applied to the upper or lower sides of the paper or board as it passes through the paper machine. If desired, part of the circumference of the spinning cone may be surrounded by a shield so as to restrict the passage of droplets to the space diametrically opposite the shield; this permits directional application of fluids to be made as and when required by the user. Fluid collected by the shield can be returned to the holding tank or into the fluid circulating system as may be convenient.

The process of the present invention is preferably used for the application of a suspension of starch to a web of paper or board. In their European Patent Application No. 84901788.4 (Publication No. 0,151,578), of which the present application is a divisional application, the applicants show that if a minor proportion of a substance capable of providing aqueous solutions of high pseudo-plasticity is added to starch powder of incorporated into a suspension of starch, it renders the starch capable of being stored for prolonged periods in aqueous suspension: of being capable of being transported through restricted orifices without giving rise to dilatency; and its suspensions of being readily transformed into droplets of sufficiently small size to enable them to be used as a means of applying starch uniformly to surfaces including surfaces of paper during manufacture.

Preferred polymers for the rheology-affecting purpose are xanthan gum and similar polysaccharides capable of dissolving in water to produce solutions possessing very high viscosity at low rates of shear compared with other commercially available polymers but a relatively low viscosity at high rate of shear. Solutions of xanthan gum show little variation in their physical properties, including rheology, over temperature ranges normally experienced in paper mills and other closed industrial premises; these properties also show neglible variations when ionic and other dissolved substances are present with the xanthan gum. This is especially important when water of unknown composition is used to prepare the starch suspensions e.g. when recycled water of differing degrees of hardness or with differing salt contents and at varying temperature is used in such preparations.

The rheology-affecting properties of xanthan gum are of particular importance if it is desired to apply starch in the form of a suspension or slurry in water since the presence of the xanthan gum in the suspension greatly reduces the tendency of starch particles to settle out or form intractable sediments. The presence of xanthan gum in a starch suspension as described in this invention allows users to store such suspensions for prolonged periods and enables users to transport the starch in the form of slurry to its eventual destination without the necessity to install special agitation equipment in the slurry containers used for transport and storage of the slurry. The convenience of being able to transport and store starch suspensions by the addition of xanthan gum is particularly important in that such suspensions are available as residues produced in certain food-manufacturing processes; it is economically advantageous to be able to supply the starch in the suspension or slurry form in which it is produced-rather than to extract and dry the starch and subsequently have to re-form the suspension before use.

The presence of xanthan gum in starch suspensions also overcomes the tendency of such suspensions to exhibit the phenomenon of dilatancy which can best be described as a rise in viscosity or resistance to flow as the rate of shear increases. Dilatancy is a condition to be avoided in handling starch and other suspensions since dilatant fluids tend to cease flowing under conditions of high rates of shear such as occur inside pumps and control valves, restrictions and bends in pipes and in the nozzles of conventional spraying equipment. Therefore, the presence of xanthan gum in such suspensions serves to prevent the well-known and troublesome tendency of suspensions to cause blockages in the equipment used to carry them and, particularly, in the nozzles of conventional spray equipment.

The amount of weight of xanthan gum can vary between 0.025% and 1.0% of the water used to prepare the starch suspensions; in the cae of suspensions prepared from dried, powder starch, the xanthan gum can be incorporated in the starch powder together with such other polymeric substances as may be desired so as to be present in the aforementioned proportions in the slurry during use. In the case of starch already prepared in suspension form as previously described, it is convenient to add the xanthan gum at an early stage in order to facilitate transport and prolonged storage.

In a further inventive step disclosed in the above-mentioned European Patent Application No. 84901788.4 the applicants show that certain polymers having film-forming capablties give improved results. When dissolved or otherwise dispersed in water and applied in droplet form in a manner similar to that already described for the application of starch suspensions to paper or board during manufacture. The preferred polymers are polysaccharides such as the alkali metal salts of carboxymethyl starches or of carboxymethyl celluloses or of alginic acid or of polyacrylic acid and their homologues, or (more preferably) the soduim salt of carboxymethyl cellulose commonly known as SCMC or CMC. The polymers may be applied with or without starch as herein described in order to provide different benefits to suit the requirements of users.

The carboxymethyl celluloses can have a degree of carboxymethylation of from 0.35 to 1.4 (i.e. related to the three labile hydroxy groups theoretically available for substitution in each anhydroglucose ring within the cellulose molecule chain) and total molecular weights from 15,000 to 800,000, preferably 50,000 to 250,000. It has been discovered that the presence of SCMC or the other polymers described in an aqueous starch dispersion has the effect of reducing the temperature at which starch particles rupture and form a gel (the gelation temperature) as exemplified by a rapid increase in viscosity. For example, 4 parts of SCMC of molecular weight approximately 100,000 and degree of carboxymethylation of 0.85 were added to 16 parts of wheat starch. The effect was to reduce the gelation temperature of a 20% by weight starch suspension from 64 degrees Celsius to 59 degrees Celsius. This reduction in gelation temperature is important in the paper or board making processes in that it is known that low temperature gelation of starch improves the beneficial effects of adding starch to cellulose. Thus, the addition of such SCMC to starch is an important and hitherto unexpected method of improving the economy of operating the paper or board manufacturing processes.

The amount of these polymers, or mixtures thereof, can vary up to 10% of the weight of the water used to carry the additives through a conventional spray or the atomising distributor as herein described, but is more usually 0.25% to 7.5%.

The presence of xanthan gum as part of the aqueous dispersion of starch or other water-soluble polymers such as SCMC increases the resistance to flow of the dispersion and thus serves to control the rate at which the dispersion penetrates the paper after application. It follows, therefore, that the presence of xanthan gum will keep the dispersion at or close to the surface of the paper even when the paper contains high proportions of water such as occurs during the early stages of paper manufacture.

It is envisaged that starch may be applied to paper or board by the methods described herein so as to represent from 0.5% to 10% of the weight of the dried paper. It is also envisaged that a rheology-affecting material, e.g. xanthan gum, may be present in sufficient quantity to prevent the starch settling out or its dispersions becoming dilatant and thus unsuitable for transportation through restricted orifices. It is also envisaged that so-called water-soluble polymers as described above may be applied to paper or board by the methods described herein in order to provide improvements to the paper or board or to augment the benefits of applying starch. It is envisaged that the starch and polymers may be blended together in the dry form; or by mixing together their respective dispersions or solutions and then applying the resultant mixture by the methods herein described; or by arranging for dispersions or solutions of the respective materials to be applied severally through two or more atomising distributors set so as to apply the respective materials at the most appropriate points of the paper- or board-making process.

While the invention has been defined above as a method of manufacture of paper or board, it will be appreciated that the paper or board so manufactured is a further aspect of the invention. Such paper or board has been shown to have increased strength and improved surface qualities, as described below in the Examples given, which make it a more valuable commodity.

The invention will be further described with reference to the following Examples:

Example 1

An atomiser as described in this invention was set above the wire part of a Foudrinier paper-making machine so as to distribute a slurry prepared by dilution of a commercial starch slurry into which had been introduced SMCM and xanthan gum immediately following manufacture of the slurry as a by-product of a process to extract other components of milled wheat. The proportions of materials used in this Example were:

Starch slurry

| | |
|---|---|
| Wheat starch solids | 380 Kg |
| SCMC | 18 Kg |
| Xanthan gum | 2 Kg |
| Water | 600 Kg |

The paper-making machine had been set to produce 40 Kg of paper of a weight of 35 grammes per

4

square metre per minute at a speed of 400 metres per minute. The paper-making machine furnish contained 1.5% dry basis of a commercial cationic starch acting partly as a method of providing the required burst strength and partly to aid drainage as well as retention of fibres on the wire part of the machine. Slurry of the above composition was pumped through a flowmeter at 1.5 litres per minute, representing 0.57 Kg starch solids per minute, i.e. 1.4% of the paper dry weight. The slurry passed through an in-line diluter in which it was mixed with water separately pumped at 5 litres per minute. The resultant 6.5 litres per minute of diluted slurry was passed through an atomiser as herein described driven by an air motor set to run at 5000 revolutions per minute producing droplets of 500 micrometres mean diameter.

The slurry was applied to the paper over a 30 hour period, samples being taken at approximately hourly intervals. During the period, the cationic starch addition to the furnish was progressively reduced to zero in order to make a comparison of this invention with a well-known and hitherto acceptable method of improving paper quality by the addition of a starch-based product to the paper-making machine furnish. Random results of this experiment are shown in Table 1.

TABLE 1

Selected waste+bleached kraft; 50 grammes/sq. metre; 1.4% starch add-on

| Sample | Mullen burst ratio* (psi) | % Change | Tensile strength (psi) | % Change |
|---|---|---|---|---|
| | cationic starch 1.5% | | | |
| Blank | 2.80 | 0.0 | 56 | 0.0 |
| A | 3.20 | +14 | 57 | +1.8 |
| | cationic starch reduced to 0.8% | | | |
| B | 3.41 | +22 | 60 | +6.7 |
| C | 3.36 | +20 | 62 | +9.7 |
| D | 3.33 | +19 | 59 | +5.4 |
| | cationic starch reduced to zero | | | |
| E | 3.46 | +24 | 56 | 0.0 |
| F | 3.52 | +26 | 56 | 0.0 |

*The parameter "Mullen Burst Ratio" (MBR) is defined as:—

$$MBR = \frac{MB}{GSM}$$

where:

MB=the pressure in pounds per square inch required to burst a sample of paper in the well-known Mullen Tester used throughout the paper-making industry;

GSM=the weight in grammes of one square metre of paper.

Thus, the "Mullen Burst Ratio" can be used to eliminate minor variations in paper weight which would otherwise affect the results of the burst test.

The results show that the addition of starch increased the burst strength of paper already containing a strength-increasing additive: furthermore, the Mullen Burst Strength Ratio increased still further as the previously used strength-increasing additive was progressively reduced to zero. Therefore, the addition of starch modified as described in this invention and applied in the form of small droplets to paper during production on a paper-making machine can produce better results than another type of starch hitherto regarded as acceptable by those skilled in the art of manufacturing paper.

The results also show that the addition of starch modified as described above an applied to paper during the early stages of manufacture enhances the tensile strength of paper to which had already been added a tensile strength increasing additive, i.e. cationic starch.

Example 2
Addition of SCMC to paper during manufacture using the atomiser

A dispersion of SCMC was applied to paper using the atomiser and flowmetering equipment described in Example 1. In this Example the modified starch slurry used in Example 1 was replaced by an aqueous solution of SCMC of molecular weight approximately 100,000 and degree of carboxymethyl substitution of 0.85, containing 20 grammes of dry SCMC per litre of solution. As in Example 1, the paper-making machine was set to produce 40 Kg of dry paper per minute. The rate of flow of the SCMC solution was adjusted to 5 litres per minute, representing an addition rate of 0.25% of SCMC to the dry paper produced.

Results of this experiment are shown in Table 2:—

## TABLE 2

Selected waste+bleached kraft; 50 grammes/sq. metre; 0.25% SCMC add-on; no starch

| SCMC % | Mullen burst ratio (psi) | % Change | Tensile strength (psi) | % Change |
|---|---|---|---|---|
| 0.0 | 2.80 | 0.0 | 56 | 0.0 |
| 0.25 | 3.46 | +23.6 | 57 | +1.8 |

The results shown in Table 2 illustrate the benefits of applying as little as 0.25% SCMC of relatively low molecular weight and high degree of carboxymethyl substitution to paper by means of the atomiser herein described during the early stages of manufacture.

Various modifications and additions may be made to the invention as defined above.

For example, the incorporation of the special atomisers into the machinery used in the manufacture of paper or board (as described above in relation to the spraying of starch suspensions and solutions such as those of SCMC) gives the possibility of the operation of the machinery by the selective or additional use of such atomisers in respect of other suspensions or solutions.

For example, such atomisers may be used with sizing agents whether in the form of solutions, emulsions or suspensions. They may also be used with colouring materials whether in the form of soluble dyes or insoluble pigment suspensions. They may also be used with oily materials, e.g. as applied to waterproof or otherwise modify the paper. They may also be used with liquid forms of reactive resins or added to paper in order to increase the wet strength or resistance to water of the dried paper; in this aspect the use of two or more atomisers arranged above the wire part of a paper-making machine permits the application of several materials which may, by physical or chemical interaction with each other and the paper to which they are applied, provide further benefits.

By adjusting the position of the atomiser along the wire part of the paper-making machine it is envisaged that the degree of penetration of the applied material may be controlled. For example, applying the material at positions where the water content of the paper is high allows such materials to penetrate the body of the paper and so become an integral part of the paper; conversely, application at points where the water content has been reduced by drainage, suction or the application of heat allows the materials to be held at the surface of the paper and so become concentrated at or near the surface.

It is also envisaged that the atomisers may be used to apply coatings to paper after the end of the drying part of the process; in this case, the atomisers could form part of the specialised machinery used to apply pigments, resins, waxes, colouring matter or various solutions to the surface of the paper.

The advantage of separating the size of droplets from the rate of flow, once incorporated into the machinery in respect of the starch suspensions and SCMC solutions as described, is of general utility throughout the process of making paper of commercial value. It is envisaged that the atomisers in question will either be connected for selective alternative use, or that a succession of atomisers will be provided at different points of the flow path in paper production and that the necessary solutions or suspensions will be in permanent communication with such atomisers for instant use when desired.

### Claims

1. A process for the manufacture of paper or board in which an additive in liquid form is applied to the surface of a web of paper or board travelling in a substantially horizontal path at paper- or board-making speed, characterised in that:

a) the liquid is supplied to the surface of a rotatable member of a rotary atomiser mounted above but close to the web surface, and

b) the rotatable member of the rotary atomiser is rotated to cause the liquid to be discharged as droplets in a substantially horizontal trajectory from an outer edge thereof and thereafter to travel along a path determined by the resultant of the horizontal force on the droplets produced by the rotation of the rotatable member and the force of gravity until they impinge on the web prior to the end of the drying part of the process.

2. A process as claimed in claim 1, characterised in that the rotary atomiser is mounted sufficiently close to the web surface that the droplets travel vertically through not more than approximately 20 cm under the force of gravity onto the web surface.

3. A process as claimed in claim 1 or 2, characterised in that the rotatable member comprises a truncated hollow conical shell which is mounted with its narrow end at the bottom, close to the web, and is driven from the top.

4. A process as claimed in claim 3, characterised in that the liquid is supplied to the lower portion of the inner surface of the conical shell.

5. A process as claimed in claim 3 or 4, characterised in that the upper cylindrical edge of said conical shell is serrated in the form of teeth.

6. A process as claimed in any of claims 1 to 5, characterised in that the rotary atomiser is mounted above the wire part of a Foudrinier paper making machine.

7. A process as claimed in any of claims 1 to 6, characterised in that part of the circumference of the rotary atomiser is surrounded with a shield so as to provide directional application of the additive in liquid form.

8. A process as claimed in any of claims 1 to 7, characterised in that the additive in liquid form is an aqueous suspension of starch.

9. A process as claimed in claim 8, characterised in that the aqueous starch suspension in a viscous suspension required to penetrate the paper and the atomiser is located so as to apply the viscous suspension at an early stage of manufacture of the paper or board.

10. A process as claimed in claim 8 or 9, characterised in that the aqueous starch suspension contains a minor amount of dissolved xantham gum to stabilise the suspension.

11. A process as claimed in claim 10, characterised in that the starch is granular.

12. A process as claimed in claim 10 or 11, characterised in that the aqueous starch suspension additionally contains a minor amount of sodium carboxyl methyl cellulose.

13. A process as claimed in any of claims 1 to 7, characterised in that the liquid additive is a solution or suspension comprising one or more of a sizing agent, a colouring material, a reactive resin and a film-forming material.

14. A process as claimed in any of claims 1 to 13, characterised in that at least one additional rotary atomiser is also employed, supplied with the same or a different additive in liquid form, the atomisers being disposed across the direction of travel of the web and close to the web surface so that the travelling web receives adjacent or overlapping longitudinal stripes of material from the atomisers.

15. A process as claimed in any preceding claim, characterised in that at least one additional atomiser is also employed, supplied with the same or a different additive in liquid form, the atomisers being disposed longitudinally of the direction of travel of the web and close to the web surface so that the travelling web receives sequential additions of material from the atomisers.

16. A process for the manufacture of paper or board in which an additive in liquid form is applied to the surface of a web of paper or board travelling in a substantially horizontal path after the drying part of the process in order to provide a surface effect, characterised in that:

a) the liquid is supplied to the surface of a rotatable member of a rotary atomiser mounted above but close to the web surface, and

b) the rotatable member of the rotary atomiser is rotated to cause the liquid to be discharged as droplets in a substantially horizontal trajectory from an outer edge thereof and thereafter to travel along a path determined by the resultant of the horizontal force on the droplets produced by the rotation of the rotatable member and the force of gravity until they impinge on the web.

17. A process as claimed in claim 16, characterised in that the additive in liquid form is a wax, an adhesive, a pigment, a dye or a film-forming material.

18. A process as claimed in claim 17, characterised in that a film-forming material is used which is sodium carboxy methyl cellulose.

19. A process as claimed in any of claims 16 to 18, characterised in that it includes the feature defined in any of claims 2 to 5 or 7.

**Patentansprüche**

1. Verfahren zur Herstellung von Papier oder Karton, bei dem ein Zusatz in flüssiger Form auf die sich mit Papier- bzw. Kartonproduktionsgeschwindigkeit über einen im wesentlichen horizontalen Weg bewegende Bahnoberfläche des Papiers oder Kartons aufgetragen wird, dadurch gekennzeichnet, daß

a) die Flüssigkeit der Oberfläche eines drehbaren Elements eines Drehzerstäubers zugeführt wird, der oberhalb, jedoch in geringem Abstand von der Bahnoberfläche montiert ist, und

b) das drehbare Element des Drehzerstäubers so gedreht wird, daß die Flüssigkeit in Tropfenform in einer im wesentlichen horizontalen Bahn von einer seiner Außenkanten austritt und die Tropfen danach über eine durch die Resultierende aus der Horizontalkraft durch das Drehelement und der Schwerkraft bestimmte Wegstrecke fliegen, ehe sie auf der Bahn vor Ende des Trocknungsteils des Verfahrens auftreffen.

2. Verfahren nach Anspruch 1, dadurch gekennzeichnet, daß der Drehzerstäuber so nahe an der Bahnoberfläche angeordnet ist, daß die Tropfen unter Schwerkraft vertikal nicht mehr als etwa 20 cm tief auf die Bahnoberfläche fallen.

3. Verfahren nach Anspruch 1 oder 2, dadurch gekennzeichnet, daß das Drehelement einen abgestumpften, hohlen, kegelförmigen Mantel umfaßt, der mit seinem schmalen Ende an Boden nahe an der Bahn angeordnet ist und von oben angetrieben wird.

4. Verfahren nach Anspruch 3, dadurch gekennzeichnet, daß die Flüssigkeit dem unteren Teil der Innenfläche des kegelförmigen Mantels zugeführt wird.

5. Verfahren nach Anspruch 3 oder 4, dadurch gekennzeichnet, daß der obere zylindrische Rand des kegelförmigen Mantels zahnförmig gezackt ist.

6. Verfahren nach einem der Ansprüche 1 bis 5, dadurch gekennzeichnet, daß der Drehzerstäuber oberhalb des Langsiebes einer Papiermaschine des Typs Foudrinier montiert ist.

7. Verfahren nach einem der Ansprüche 1 bis 6, dadurch gekennzeichnet, daß ein Teil des Umfangs des Drehzerstäubers so von einem Schirm umgeben ist, daß der Zusatz in flüssiger Form zielgerichtet aufgetragen wird.

8. Verfahren nach einem der Ansprüche 1 bis 7, dadurch gekennzeichnet, daß der Zusatz in flüssiger Form eine wässerige Stärkesuspension ist.

9. Verfahren nach Anspruch 8, dadurch gekennzeichnet, daß die wässerige Stärkesuspension eine viskose Suspension ist, die das Papier durchdringen soll, und daß der Zerstäuber so angeordnet ist, daß er die viskose Suspension in einer frühen Herstellungsphase des Papiers oder Kartons aufträgt.

10. Verfahren nach Anspruch 8 oder 9, dadurch gekennzeichnet, daß die wässerige Stärkesuspension zur Stabilisierung der Suspension eine kleine Menge eines gelösten Xanthangummis enthält.

11. Verfahren nach Anspruch 10, dadurch gekennzeichnet, daß die Stärke ein Granulat ist.

12. Verfahren nach Anspruch 10 oder 11, dadurch gekennzeichnet, daß die wässerige Stärkesuspension zusätzlich eine kleine Menge an Natriumcarboxymethylzellulose enthält.

13. Verfahren nach einem der Ansprüche 1 bis 7, dadurch gekennzeichnet, daß als Zusatz in flüssiger Form eine Lösung oder Suspension aus einem oder mehreren aus der Gruppe bestehend aus einem Schlichtmittel, einem Färbematerial, einem reaktionsfähigen Harz und einem filmbildenden Material verwendet wird.

14. Verfahren nach einem der Ansprüche 1 bis 13, dadurch gekennzeichnet, daß noch wenigstens ein zusätzlicher Drehzerstäuber eingesetzt wird, der mit demselben oder einem anderen Zusatz in flüssiger Form gespeist wird, wobei die Zerstäuber quer zur Bewegungsrichtung der Bahn und nahe an der Bahnoberfläche derart angeordnet sind, daß die sich bewegende Bahn benachbarte oder überlappende Längsstreifen des Materials von den Zerstäubern aufnimmt.

15. Verfahren nach einem der vorhergehenden Ansprüche, dadurch gekennzeichnet, daß noch wenigstens ein zusätzlicher Zerstäuber eingesetzt wird, der mit demselben oder einem anderen Zusatz in flüssiger Form gespeist wird, wobei die Zerstäuber entlang der Bewegungsrichtung der Bahn und nahe an der Bahnoberfläche derart angeordnet sind, daß die sich bewegende Bahn aufeinanderfolgende Zugaben von Material von den Zerstäubern aufnimmt.

16. Verfahren zur Herstellung von Papier oder Karton, bei dem zur Erzielung eines Oberflächeneffektes nach dem Trocknungsteil des Verfahrens ein Zusatz in flüssiger Form auf die sich über einen im wesentlichen horizontalen Weg bewegende Bahnoberfläche des Papiers oder Kartons aufgetragen wird, dadurch gekennzeichnet, daß

a) die Flüssigkeit der Oberfläche eines drehbaren Elements eines Drehzerstäubers zugeführt wird, der oberhalb, jedoch in geringem Abstand von der Bahnoberfläche montiert ist; und

b) das drehbare Element des Drehzerstäubers so gedreht wird, daß die Flüssigkeit in Tropfenform in einer im wesentlichen horizontalen Bahn von einer seiner Außenkanten austritt und die Tropfen danach über eine durch die Resultierende aus der Horizontalkraft durch das Drehelement und der Schwerkraft bestimmte Wegstrecke fliegen, ehe sie auf der Bahn vor Ende des Trocknungsteils des Verfahrens auftreffen.

17. Verfahren nach Anspruch 16, dadurch gekennzeichnet, daß als Zusatz in flüssiger Form ein Wachs, ein Klebstoff, ein Pigment, ein Farbstoff oder ein filmbildendes Material verwendet wird.

18. Verfahren nach Anspruch 17, dadurch gekennzeichnet, daß als filmbildendes Material Natriumcarboxymethylzellulose verwendet wird.

19. Verfahren nach einem der Ansprüche 16 bis 18, dadurch gekennzeichnet, daß es das in einem der Ansprüche 2 bis 5 oder 7 definierte Merkmal enthält.

## Revendications

1. Un procédé de fabrication de papier ou de carton dans lequel un additif, sous forme liquide, est appliqué à la surface d'une nappe de papier ou de carton se déplaçant suivant un trajet à peu près horizontal à la vitesse de fabrication du papier ou du carton, caractérisé en ce que:

a) le liquide est appliqué à la surface d'un élément tournant d'un vaporisateur rotatif monté au-dessus mais près de la surface de la nappe, et

b) l'élément tournant du vaporisateur rotatif tourne afin que le liquide soit déchargé en gouttelettes suivant une trajectoire à peu près horizontale du bord extérieur de celui-ci et avance ensuite le long d'une trajectoire déterminée par la résultante de la force horizontale exercée sur les gouttelettes produites par la rotation de l'élément tournant, et de la force de gravité jusqu'à ce qu'elles frappent la nappe avant la fin du stade de séchage du procédé.

2. Un procédé selon la revendication 1, caractérisé en ce que le vaporisateur rotatif est monté suffisament près de la surface de la nappe pour que la distance parcourue par les gouttelettes tombant verticalement sur la surface de la nappe, sous l'effet de la force de gravité, ne soit pas supérieure à 20 cm approximativement.

3. Un procédé selon les revendications 1 ou 2, caractérisé en ce que l'élément tournant comporte une enveloppe creuse tronconique dont l'extrémité étroite est montée en bas, près de la nappe, et qui est entraînée par le haut.

4. Un procédé selon la revendication 3, caractérisé en ce que le liquide est fourni à la partie inférieure de la surface interne de l'enveloppe conique.

5. Un procédé selon les revendications 3 ou 4, caractérisé en ce que le bord cylindrique supérieur de ladite enveloppe conique est formé en dents de scie.

6. Un procédé selon l'une quelconque des revendications 1 à 5, caractérisé en ce que le vaporisateur rotatif est monté au-dessus de la partie cablée d'une machine à papier Foudrinier.

7. Un procédé selon l'une quelconque des revendications 1 à 6, caractérisé en ce que le pourtour du vaporisateur rotatif est entouré d'une enveloppe de protection de manière à assurer une application directionnelle de l'additif sous forme liquide.

8. Un procédé selon l'une quelconque des revendications 1 à 7, caractérisé en ce que l'additif sous forme liquide est une suspension aqueuse d'amidon.

9. Un procédé selon la revendication 8, caractérisé en ce que la suspension aqueuse d'amidon est une suspension visqueuse choisie pour pénétrer le papier et le vaporisateur est monté de manière à appliquer la suspension visqueuse à une première étape de fabrication du papier ou de carton.

10. Un procédé selon les revendications 8 ou 9, caractérisé en ce que la suspension aqueuse d'amidon contient une faible quantité de gomme xanthane dissoute pour stabiliser la suspension.

11. Un procédé selon la revendication 10, caractérisé en ce que l'amidon est sous forme granulaire.

12. Un procédé selon les revendications 10 ou 11, caractérisé en ce que la suspension aqueuse d'amidon contient en plus une faible quantité de pâte de soude carboxyméthylique.

13. Un procédé selon l'une quelconque des revendications 1 à 7, caractérisé en ce que l'additif liquide est une solution ou une suspension comportant un ou plusieurs agents d'encollage, une matière colorante, une résine de réaction et une matière filmogène.

14. Un procédé selon l'une quelconque des revendications 1 à 13, caractérisé en ce que au moins un vaporisateur rotatif supplémentaire est également utilisé, alimenté avec le même additif sous forme liquide ou à l'aide d'un additif différent, les vaporisateurs étant disposés transversalement à la direction de déplacement de la nappe et près de la surface de la nappe de manière à ce que la nappe en déplacement reçoive des bandes, longitudinales adjacentes ou en chevauchement, de matière à partir des vaporisateurs.

15. Un procédé selon l'une quelconque des revendications précédentes, caractérisé en ce que au moins un vaporisateur supplémentaire est également utilisé, alimenté avec le même additif sous forme liquide ou à l'aide d'un additif différent, les vaporisateurs étant disposés longitudinalement par rapport à la direction de déplacement de la nappe et près de la surface de la nappe de manière à ce que la bande en déplacement reçoive des apports successifs de matière en provenance des vaporisateurs.

16. Un procédé pour la fabrication de papier ou de carton dans lequel un additif sous forme liquide est appliqué à la surface d'une nappe de papier ou de carton se déplaçant suivant un trajet à peu près horizontal après l'étape de séchage du procédé afin de réaliser un effet de surface, caractérisé en ce que:

a) le liquide est fourni à la surface d'un élément tournant d'un vaporisateur rotatif monté au-dessus mais près de la surface de la nappe, et

b) l'élément tournant du vaporisateur rotatif est entraîné en rotation afin que le liquide soit déchargé sous forme de gouttelettes suivant une trajectoire à peu près horizontale à partir d'un bord externe de celui-ci et suive ensuite une trajectoire déterminée par la résultante de la force horizontale exercée sur les gouttelettes produites par la rotation de l'élément tournant et la force de gravité jusqu'à ce qu'elles frappent la nappe.

17. Un procédé selon la revendication 16, caractérisé en ce que l'additif sous forme liquide est une cire, un adhésif, un pigment, une teinture, ou une matière filmogène.

18. Un procédé selon la revendication 17, caractérisé en ce que la matière filmogène utilisée est une pâte de soude carboxyméthylique.

19. Un procédé selon l'une quelconque des revendications 16 à 18, caractérisé en ce qu'il comporte les caractéristiques définies dans l'une quelconque des revendications 2 à 5 ou 7.